(19) Europäisches Patentamt
European Patent Office
Office européen des brevets

(11) Publication number : **0 408 762 B1**

# (12) EUROPEAN PATENT SPECIFICATION

(45) Date of publication of patent specification : **22.06.94 Bulletin 94/25**

(51) Int. Cl.$^5$ : **G11B 5/716,** G11B 5/708, G11B 5/706

(21) Application number : **90901667.7**

(22) Date of filing : **08.01.90**

(86) International application number : **PCT/JP90/00012**

(87) International publication number : **WO 90/07775 12.07.90 Gazette 90/16**

## (54) MAGNETIC RECORDING MEDIUM HAVING BALANCED CHARACTERISTICS.

(30) Priority : **07.01.89 JP 11524/89**

(43) Date of publication of application : **23.01.91 Bulletin 91/04**

(45) Publication of the grant of the patent : **22.06.94 Bulletin 94/25**

(84) Designated Contracting States : **DE FR GB**

(56) References cited :
**JP-A- 578 228**
**JP-A-58 200 425**
**JP-A-58 205 928**
**JP-A-59 231 732**
**JP-U-58 118 544**
**REFRACTORIES: CERAMICS, week 8904, page 12, abstract no. 89-027517/04; & JP-A-63 300 425 (FUJI PHOTO FILM K.K.)**
**REFRACTORIES: CERAMICS, week 8849, page 15, abstract no. 88-349038/49; & JP-A-63 259 826 (FUJI PHOTO FILM K.K.)**
**REFRACTORIES: CERAMICS, week 8628, page 7, abstract no. 86-178401/28; & JP-A-61 110 340 (FUJI PHOTO FILM K.K.)**

(73) Proprietor : **KONICA CORPORATION**
**26-2, Nishishinjuku 1-chome,**
**Shinjuku-ku**
**Tokyo 160 (JP)**

(72) Inventor : **NAKANO, Yasushi Konica Corporation**
**1, Sakura-machi**
**Hino-shi**
**Tokyo 191 (JP)**
Inventor : **TOBISAWA, Seiichi Konica Corporation**
**1, Sakura-machi**
**Hino-shi**
**Tokyo 191 (JP)**
Inventor : **KOYAMA, Noboru Konica Corporation**
**1, Sakura-machi**
**Hino-shi**
**Tokyo 191 (JP)**

(74) Representative : **Ellis-Jones, Patrick George Armine et al**
**J.A. KEMP & CO.**
**14 South Square**
**Gray's Inn**
**London WC1R 5LX (GB)**

EP 0 408 762 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a magnetic recording medium and, particularly, to a magnetic recording medium with well-balanced characteristics.

In recent years, with the improvements of the qualities of magnetic recording mediums such as magnetic tapes, there have been demands for making the magnetic material density higher. Various proposals were made including magnetic recording media comprised of a support which has provided thereon a magnetic layer with a multiple component layer structure, such as one having a structure of two component layers, or those having a structure of three or more component layers.

However, one of the conventional multilayer structured magnetic recording media has been either well balanced or highly level in, for example, any of the electromagnetic conversion characteristics, the travelling properties of magnetic tapes, or the characteristics of drop-out prevention.

It is a principal object of the invention to provide a magnetic recording medium whose characteristics, such as those mentioned above, are all well-balanced on a high level.

To be more concrete, it is an object of the invention to provide a magnetic recording medium with improved electromagnetic conversion characteristics and well-balanced between the chroma and RF outputs While having improved tape travelling durability, a high Young's modulus in the magnetic layer and hardly damaged tape edges.

A further object of the invention is to provide a magnetic recording medium producing few drop-outs.

The magnetic recording media of the present invention comprise a non-magnetic support having provided thereon the following first and second magnetic layers in order from the support side. Each of the magnetic layers satisfy the requirements described below.

The first magnetic layer has a specific surface area of 25 to 40m$^2$/g measured by a BET method, and it uses therein a Co-containing $\gamma$-iron oxide magnetic material having a coercive force Hc of 600 to 750 Oe. The magnetic material contains silicon in a proportion of 0.03 to 1 wt% of the total weight of the magnetic material, and carbon black in a proportion of 3 to 20 wt% of the total weight of the magnetic material.

The second magnetic layer has a specific surface area of 25 to 70m$^2$/g measured by a BET method, and it uses therein a Co-containing $\gamma$-iron oxide magnetic material having a coercive force Hc of 750 to 950 Oe. The magnetic material contains carbon black in a proportion of not more than 3 wt% of the total weight of the magnetic material.

The magnetic material used in the magnetic recording media of the invention is, preferably, a material comprising needle-shaped iron oxide particles whose surface layers are covered with $Co^{2+}$ where the crystals have a large magnetic anisotropy.

As the magnetic material of the first magnetic layer of each magnetic recording medium of the invention, a magnetic material comprising Co-containing $\gamma$-iron oxide particles surface-treated with a silicon compound is used. In the magnetic recording media, this silica compound is generally present in the form of a silica oxide.

The silica content of a magnetic material is 0.03 to 1 wt%, preferably 0.05 to 0.3 wt% in terms of silicon, in order to provide improved dispersibility and standing stability of a magnetic coating solution to be used.

The above-mentioned Co-$\gamma$-iron oxide is preferably represented by Co-$\gamma$-FeOx in which $x = 1.33$ to $1.50$.

A magnetic recording medium consisting of only the first magnetic layer of the magnetic recording medium relating to the invention has a low RF output, because the coercive force of the magnetic material is weak. On the other hand, a single-layered magnetic recording medium consisting of only the second magnetic layer has a low chroma output, because the coercive force of the magnetic material is great.

However, when a magnetic recording medium is comprised of the second magnetic layer arranged over to the first magnetic layer, both of the RF and chroma outputs can be well-balanced and kept at a high level.

For example, a magnetic recording medium consisting of only the first magnetic layer which contains a large quantity of carbon black and a relatively small quantity of binders has a low Young's modulus. In the case of a tape-shaped magnetic recording medium, therefore, the edge and center areas of the tape will be extended unevenly so that the tape may be deformed wavewise or the tape is liable to be damaged in the course of moving.

On the other hand, the above-mentioned defects can be improved effectively, when the medium is also provided with a second magnetic layer which contains virtually no carbon black but a relatively large quantity of binders provided over the first magnetic layer.

In addition to the above, for example, the specific surface resistance of the second magnetic layer is high, because it contains virtually no carbon black. Therefore, static electricity is liable to be generated and thus attract dust or the like so that dropouts are increased. When combining the above-mentioned second magnetic layer and the first magnetic layer which contains a larger quantity of carbon black together, the above-mentioned defects can be overcome.

The examples of the binders useful for the magnetic recording media of the invention include a vinyl chloride resin having an anionic functional group (hereinafter called resin A) and, preferably, the combination of resin A and a polyurethane having a glass-transition point within the range of -30°C to 10°C (hereinafter called resin B).

The above-mentioned resin A improves the dispersion of the above-mentioned magnetic powder in the binder.

The examples of the above-mentioned anionic functional groups used in the above-mentioned resin A include, typically, $-SO_3M$, $-OSO_2M$, $-OSO_3M$, -COOM, and

$$\begin{array}{c} OM^1 \\ | \\ -P{=}O \\ | \\ OM^2 \end{array}$$

wherein M represents hydrogen, lithium or sodium, and $M^1$ and $M^2$ each independently represent hydrogen, lithium, potassium, sodium or an alkyl group.

Among them, the particularly preferable groups are $-OSO_3M$, -COOM, and

$$\begin{array}{c} OM^1 \\ | \\ -P{=}O \\ | \\ OM^2 \end{array}$$

Resin A may be prepared, for example, by modifying a vinyl chloride resin and then introducing the above-mentioned anionic functional group thereinto.

To be more precise, it may be prepared by the condensation of the following substances in a dehydrochlorination reaction. A vinyl chloride resin, and any compound which contains an anionic functional group and a chlorine atom, including, for example, $C\ell\text{-}CH_2CH_2SO_3M$, $C\ell\text{-}CH_2CH_2OSO_2M$, $C\ell\text{-}CH_2COOM$ and

$$\begin{array}{r} OM^1 \\ | \\ C\ell\text{-}CH_2\text{-}P{=}O \\ | \\ OM^2 \end{array}$$

in which M, $M^1$ and $M^2$ each are synonymous with those given before.

Vinyl chloride resins include, for example, a vinyl chloride-vinyl acetate-vinyl alcohol copolymer, a vinyl chloride-vinyl propionate-vinyl alcohol copolymer, a vinyl chloride-vinyl acetate-vinyl maleate-vinyl alcohol copolymer, a vinyl chloride-vinyl propionate-vinyl maleate-vinyl alcohol copolymer, and a vinyl chloride-allylglycidyl ether-acrylate copolymer.

When resin A is prepared by introducing a metal sulfonate group into a vinyl chloride resin, for example, it is enough to have a dehydrochlorination reaction by the OH group of vinyl alcohol contained in a copolymer with a chlorinated metal sulfonate, for example, $c\ell\text{-}CH_2CH_2SO_3M$ or $C\ell\text{-}CH_2CHOSO_2M$, in a polar solvent such as dimethylformamide and dimethylsulfoxide, and in the presence of a dehydrochlorinating agent, for example, pyridine, picoline or triethylamine, or an epoxy compound such as ethylene oxide or propylene oxide.

Among the resins A, the preferable ones are, for example, vinyl chloride copolymers.

Such vinyl chloride copolymers may be prepared by copolymerizing a vinyl chloride monomer, a copolymerizable monomer containing an alkali salt of sulfonic acid or phosphoric acid and, if required, the other copolymerizable monomers. They may readily be prepared by a vinyl synthesizing process, and various kinds of copolymer components may selectively be used therein. Thus the optimum adjustment of the characteristics of such copolymers may be performed.

The metals of the sulfonates or phosphates are preferably alkali metals including, more preferably, sodium, potassium or lithium. Potassium is more preferably used from the viewpoints of solubility, reactivity and yield.

The copolymerizable monomers containing sulfonates may be exemplified as follows:

$CH_2=CHSO_3M$

$CH_2=CHCH_2SO_3M$

$CH_2=C(CH_3)CH_2SO_3M$

$CH_2=CHCH_2OCOCH(CH_2COOR)SO_3M$

$CH_2=CHCH_2OCH_2CH(OH)CH_2SO_3M$

$CH_2=C(CH_3)COOC_2H_4SO_3M$

$CH_2=CHCOOC_4H_8SO_3M$

$CH_2=CHCONHC(CH_3)_2CH_2SO_3M$

The phosphates may be exemplified as follows:

$CH_2=CHCH_2OCH_2(OH)CH_2\text{-}O\text{-}PO_3M^3Y^1$

$CH_2=CHCONHC(CH_3)_2CH_2\text{-}O\text{-}PO_3M^3Y^2$

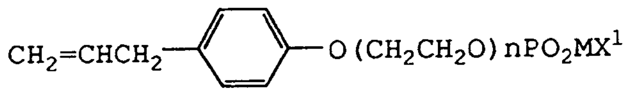

$CH_2=CHCH_2O(CH_2CH_2O)mPOMX^2$

wherein M is an alkali metal, R is an alkyl group having 1 to 20 carbon atoms, $Y^1$ is any one of a hydrogen atom, M, and $CH_2=CHCH_2OCH_2CH(OH)CH_2$-, $Y^2$ is any one of a hydrogen atom, M, and $CH_2CH$-$=CONHC(CH_3)_2CH_2$-, $X^1$ is any one of

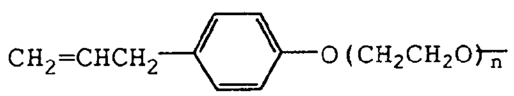 ,

OH and OM,

$X^2$ is any one of $CH_2=CHCH_2O(CH_2CH_2O)m$, OH and OM, and m and n are each independently positive integers of 1 to 100.

If required, it is permitted to copolymerize further with copolymerizable monomers including, for example, various vinyl esters, vinylidene chloride, acrylonitrile, methacrylonitrile, styrene, acrylic acid, methacrylic acid, various acrylic acid esters, methacrylic acid esters, ethylene, propylene, isobutene, butadiene, isoprene, vinyl ether, allyl ether, allyl esters, acrylamide, methacrylamide, maleic acid, and maleic acid esters.

The binders applicable to the invention may be polymerized in a polymerization process such as an emulsion-polymerization process, a solution-polymerization process, a suspension-polymerization process or a block polymerization process. In any of these processes, it is permitted to apply a known technique such as those for partial or continuous addition of a molecular weight controller, a polymerization intiator, or monomers, if required.

In such a binder as mentioned above, the acidic groups may contain salt-containing monomers in a proportion within the range of, preferably, 0.01 to 30 mol%. If their content is too much, there may be some instances where the solubility may be lowered and likely to produce a gelation. If it is too little, on the other hand, there may be some instances where desirable characteristics may not be obtained.

It is preferable that such a vinyl chloride copolymer further contains an epoxy or hydroxyl group.

The preferable epoxy groups may be exemplified as follows:

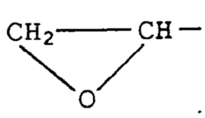 . 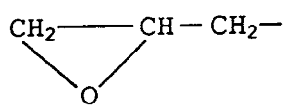

To be more precise, the resins having the combinations of the following units may be exemplified.

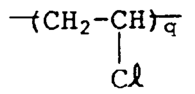

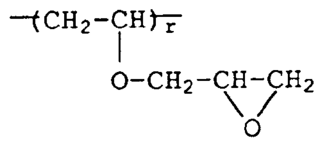

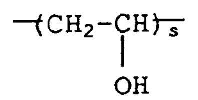

$-(Z)_t-$

wherein q is an integer of 200 to 800, r is an integer of 1 to 100, s is an integer of 0 to 100, and t is an integer of 0 to 100, provided that both of s and t are not be 0 at the same time, and Z represents a monomer unit component containing the alkali metal salt of a sulfo or phospho group.

The molecular weight of resin A is within the range of, normally, 5000 to 80000 and, preferably, 10000 to 30000. If exceeding 80000, the viscosity of a magnetic paint will be so high that it will rise above a tolerable level, so that there may be some instances where the friction coefficient of the magnetic layer produced may be increased, or the working efficiency may be lowered in the manufacturing processes. If the molecular weight is less than 5000, an unreacted portion will be produced from the step of coating a magnetic paint on the aforementioned non-magnetic support to the step of hardening the paint so that a low molecular weight component will remain. Therefore, there may be some instances where the physical properties of the coated membranes may deteriorate.

The ratio of resin A is within the range of, normally, 5 to 30 parts by weight and, preferably, 5 to 20 parts by weight each per 100 parts by weight of the aforementioned magnetic powder. If the ratio of resin A is less than 5 parts by weight, the dispersion conditions of the magnetic powder in the magnetic layer will deteriorate. As a result there may be instances where the electromagnetic conversion characteristics, travelling properties and durability of the magnetic recording media of the invention may be decreased. If it is more than 30 parts by weight, on the other hand, there may be some instances where the effects may not be displayed as much.

In the magnetic recording media of the invention, the polyurethane of resin B is such that the mechanical strength of the magnetic layers is enhanced so as to improve the durability, and such that an increase in the friction coefficient of a magnetic layer surface is prevented and so the surface is flat and smooth by the combined use of resins A and B.

The glass transition temperature Tg of resin B is normally within the range of -30°C to 50°C. If it is lower than -30°C, the rigidity of a magnetic layer itself will be lowered, such that there may be some instances where the travelling durability may not satisfactorily be improved.

If it exceeds 50°C, on the other hand, the calenderability will be lowered, so that there may be some instances where a surface-smoothing treatment may hardly be made.

Resin B may be prepared through the reaction of isocyanate with diol, for example.

Isocyanates applicable thereto include for example 2,4-tolyleneisocyanate, 2,6-tolylenediisocyanate, p-phenylenediisocyanate, diphenylmethanediisocyanate, diphenylmethanediisocyanate, m-phenylenediisocyanate, hexamethylenediisocyanate, tetramethylenediisocyanate, 3,3'-dimethoxy-4,4'-biphenylenediisocyanate, 4,4'-diisocyanate-diphenylether, 1,3-naphthalenediisocyanate, p-xylenediisocyanate, m-xylenediisocyanate, 1,3-diisocyanatemethylcyclohexane, 1,4-diisocyanatemethylcyclohexane, 4,4'-diisocyanatecyclohexane, 4,4'-diisocyanatedicyclohexylmethane, and isophoronediisocyanate.

Diols which may be used to prepare resin B include, for example, ethylene glycol, propylene glycol, 1,3-propanediol, 1,4-butanediol, 1,5-pentanediol, 1,6-hexanediol, neopentyl glycol, diethylene glycol, dipropylene glycol, 2,2,4-trimethyl-1,3-pentanediol, 1, 4-cyclohexane dimethanol, an ethylene oxide adduct of bisphenol A, polyethylene glycol, polypropylene glycol, and polytetramethylene glycol. Besides the above, it is permitted to use tri- or tetraols such as trimethylol ethane, trimethylol propane, glycerol and pentaerythritol.

The compounding ratio of resin B to 100 parts by weight of the above-mentioned magnetic powder is within the range of, normally, 1 to 20 parts by weight and, preferably, 3 to 15 parts by weight. If this compounding ratio is lower than one part by weight, the surface roughness of a magnetic layer will not satisfactorily be diminished and the calenderability will not be satisfactorily improved. As a result there may be some instances where the electromagnetic conversion characteristics and travelling durability of the magnetic recording media of the invention may not satisfactorily be improved. On the other hand, if the compounding ratio thereof

is more than 20 parts by weight, there may be some instances where the dispersibility of the magnetic powder of the magnetic layer may not satisfactorily be improved.

In the coating solution applicable to form the magnetic layers of the invention, a dispersant is preferably used. Also additives such as a lubricant, abrasives, matting agents and antistatic agents may be added therein, if required.

The dispersants preferably used in the invention include, for example, phosphoric acid esters, an amine compound, an alkyl sulfate, a fatty acid amide, a higher alcohol, a polyethylene oxide, a sulfosuccinic acid, a sulfosuccinic acid ester, and a known surfactant and the salts thereof. Besides the above, it is permitted to use the salts of a high molecular dispersant having an anionic organic group such as -COOH. Among these dispersants, phosphoric acid esters are desirably used. They are preferably used in an amount within the range of 0.5 to 5 parts by weight and, more preferably, 1 to 3 parts by weight each per 100 parts by weight of the magnetic material used. It is particularly preferable to contain such a phosphoric acid ester into the first magnetic layer.

The above-mentioned dispersants may be used independently or in combination.

The phosphoric acid esters preferably used in the invention include, for example, the compounds represented each by the following Formula I:

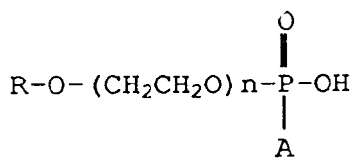

wherein A represents an OH group or R-O-$(CH_2CH_2O)n$-; R represents an optionally substituted alkyl group, alkenyl group, aryl group or alkylaryl group; and n is an integer of 2 to 50.

Next, the typical examples of the phosphates represented by Formula I will be given below.

a $C_{18}H_{35}O(CH_2CH_2O)_5PO(OH)_2$

b $[C_{18}H_{35}O(CH_2CH_2O)_5]_2PO(OH)$

c

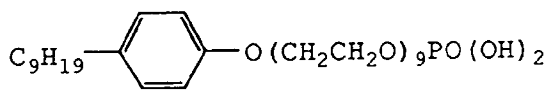

d

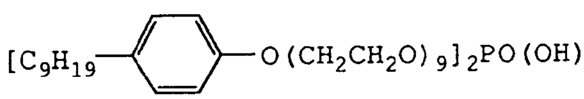

e

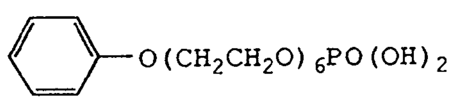

f

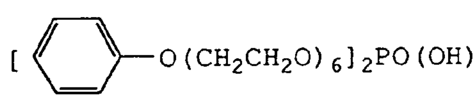

g

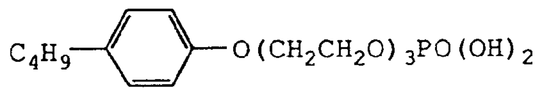

h

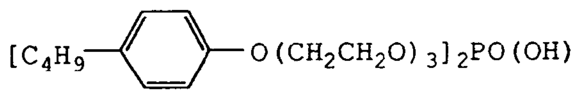

i

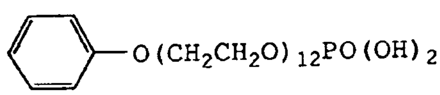

j

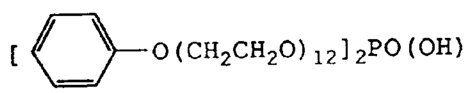

k

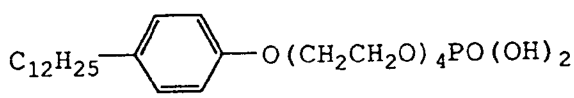

l

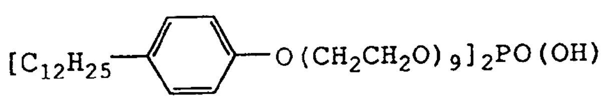

m

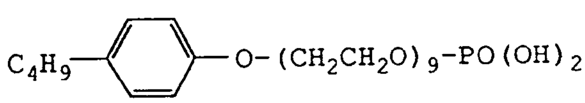

n

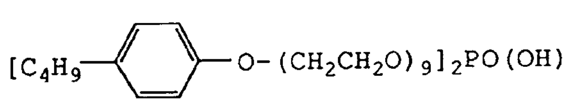

The lubricants include, for example, silicone oil, graphite, carbon black graft polymer, molybdenum disulfide, tungsten disulfide, lauric acid, myristic acid, palmitic acid, and stearic acid. Besides the above, it is also permitted to use a fatty acid ester which is a wax comprising a monohydric alcohol having 15 to 40 carbon

atoms a monobasic fatty acid having 12 to 16 carbon atoms. These lubricants are preferably added in an amount within the range of 0.2 to 20 parts by weight to 100 parts by weight of a binder used.

The abrasives include, for example, the materials for general use, such as fused alumina, silicon carbide, chromium oxide, iron oxide red, corundum, artificial corundum, artificial diamond, garnet, and emery comprising principally corundum and magnetite. As the abrasives applicable thereto, those having an average particle-size within the range of 0.05 to 5 μm and, more preferably, 0.1 to 2 μm may be used. These abrasives are preferably added in an amount within the range of 1 to 20 parts by weight to 100 parts by weight of a binder used.

As for the matting agents, an organic powder and an inorganic powder may be used independently or in a mixture.

The organic powders preferably used in the invention include an acrylstyrene resin, a benzoguanamine resin powder, a melamine resin, and a phthalocyanine pigment. Besides the above, a polyolefin resin powder, a polyester resin powder, a polyamide resin powder, a polyimide resin powder, and a polyfluoroethylene resin powder may also be used.

The inorganic powders include, for example, a silicon oxide, titanium oxide, alminium oxide, calcium carbonate, barium sulfate, zinc oxide, tin oxide, chromium oxide, silicon carbide, calcium carbide, $\alpha$-$Fe_2O_3$, talc, kaolin, calcium sulfate, boron nitride, zinc fluoride, and molybdenum dioxide.

When static electricity is accumulated in the course of using a magnetic recording medium, the static electricity is generally discharged between the recording medium and the magnetic head, so that noise is liable to be produced and there may be some instances where dust may be adsorbed and cause a dropout.

Therefore, it has been generally required to lower the surface electric resistance of a magnetic layer, and so carbon black particles have normally been added into the magnetic layer.

Carbon black is added into the first magnetic layer of the magnetic recording medium of the invention with the main purpose of lowering the specific surface resistance of the magnetic layer and providing a light-tightness to the magnetic layer. Carbon black having an average primary particle-size of 10 to 40 nm is preferably used. The preferably applicable types of carbon black include, for example, Conductex C-975 having an average particle-size of 24 nm, C-SC having an average particle-size of 20 nm, CF-9 having an average particle-size of 40 nm, and Raven R-1255 and R-2000, each manufactured by Columbian carbon Co.; and Vulcan V-P having an average particle-size of 22 nm, BP-2000, and BP-1000, each manufactured by Cabot Co.

Carbon black which is to be added into the second magnetic layer has the main purpose of lowering the kinematic friction coefficient. Those having an average primary particle-size of 40 to 100 nm are preferably used. Among them, the preferably applicable ones include, for example, R-420 having an average particle-size of 68 nm, and R-450 having an average particle-size of 62 nm, each manufactured by Columbian Carbon Co.; Sterling-V having an average particle-size of 50 nm manufactured by Cabot Co.; and Denka-Black HS-100 having an average particle-size of 53 nm and HS-500 having an average particle-size of 76 nm, each manufactured by Asahi Carbon Co.

In the invention, carbon black is added into the first magnetic layer, in a proportion of 3 to 20 wt%, preferably 7 to 13 wt%, from the viewpoints of lowering the specific surface resistance and providing light-tightness, as mentioned above.

Carbon black is added into the second magnetic layer, in a proportion of not more than 3 wt%, preferably 0.1 to 3 wt%, more preferably 0.1 to 1 wt% from the viewpoint of lowering the friction coefficient, as mentioned above.

The other antistatic agents apart from the above given examples include, for example, conductive powder such as those of graphite, a tin oxide-antimony oxide compound, and a titanium oxide-tin oxide-antimony oxide compound; natural surfactants such as saponin; nonionic surfactants such as those of alkylene oxide, glycerol, and glycidol; cationic surfactants such as a higher alkylamine, a quaternary ammonium salt, pyridine and the other heterocyclic rings, a phosphonium compound, and a sulfonium compound; anionic surfactants such as a carboxylic acid, sulfonic acid, phosphoric acid, and those containing an acidic group such as a sulfonate group or a phosphate group; and amphoteric surfactants such as an amino acid, an aminosulfonic acid, or sulfuric acid esters or phosphoric acid esters of aminoalcohol.

The solvents preferably compounded into the above-given paints, or the diluting solvents to be used when coating the paints include, for example, ketones such as acetone, methyl-ethyl ketone, methylisobutyl ketone, and cyclohexane; alcohols such as methanol, ethanol, propanol, and butanol; esters such as methyl acetate, ethyl acetate, butyl acetate, ethyl lactate, and ethyleneglycol monoacetate; ethers such as glycoldimethyl ether, glycolmonoethyl ether, dioxane, and tetrahydrofuran; aromatic hydrocarbons such as benzene, toluene, and xylene; and halogenated hydrocarbons such as methylene chloride, ethylene chloride, carbon tetrachloride, chloroform, and chlorobenzene.

In the magnetic recording media of the invention, for the purpose of improving the durability of the magnetic layer thereof, various kinds of hardeners are preferably contained in magnetic paints. For example, isocyanate may be contained therein. Suitable aromatic isocyanates include, for example, tolylenediisocyanate TDI, and the adducts of these isocyanates and an activated hydrogen compound. The suitable average molecular weight thereof is within the range of 100 to 3,000.

The supports include, for example, those made of polyesters such as polyethyleneterephthalate and polyethylene-2,6-naphthalate; those made of polyolefins such as polypropylene; those made of cellulose derivatives such as cellulose acetate and cellulose diacetate; and those made of plastics such as polyamide and polycarbonate. Besides the above, those made of metals such as Cu, Aℓ and Zn, glass, boron nitride, or ceramics such as Si carbide, may also be used.

The thickness of the support is preferably of the order of 3 to 100 μm and more preferably 5 to 50 μm in the case of the film or sheet-shaped supports. It is preferably of the order of 30 μm to 10 mm in the case of the disc or card-shaped supports. The supports can be cylindrical in shape in the case of the drum-shaped supports; the type of support may be so determined as to meet the specifications of the recorder used.

It is also permitted to interpose an interlayer between the support and the magnetic layer so as to improve the adhesive property. It is further permitted to interpose an interlayer between the first and second magnetic layers, or to arrange a protective layer onto the second magnetic layer.

The above-mentioned magnetic layers are preferably formed on the support in any one of the following coating methods, namely, an air-doctor coating method, a blade coating method, an air-knife coating method, a squeeze coating method, an impregnation coating method, a reverse-roll coating method, a transfer-roll coating method, a gravure coating method, a kiss coating method, a cast coating method, a spray coating method, and an extrusion coating method.

In the case of forming a magnetic layer on a support in any one of the above-given methods, there are two coating systems, namely, the so-called wet-on-dry coating system in which the magnetic layers are laid on one after another in each coating-and-drying-step, and the so-called wet-on-wet coating system in which one or more layers are coated at the same time or one after another on a layer still remaining undried and wet. For preparing the magnetic recording media of the invention, either of the systems may be adopted. It is, however, preferable to use the wet-on-wet coating system to improve the electromagnetic characteristics.

In the invention, whether one of the coating systems is adopted or the other, it is desirable to set the thickness of the first magnetic layer within the range of, normally, 1.0 to 4.0 μm and, preferably, 1.0 to 3.0 μm, and the thickness of the second magnetic layer within the range of, normally, 0.1 to 4.0 μm, preferably, 0.1 to 2.0 μm and, more preferably, 0.1 to 1.0 μm.

The magnetic layer thus coated on the support in the above-mentioned coating method is treated, if required, by orienting the ferromagnetic metal oxide powder of the layer, and the resulting magnetic layer is then dried.

In this case, the orientation magnetic field used is of the order of AC or DC 500 to 5000 Oe, preferably. The drying temperature is preferably of the order of 50 to 120°C. And, the drying time is preferably of the order of 0.5 to 10 seconds,.

The magnetic recording media of the invention are preferably prepared by, if required, applying a surface smoothing treatment and cutting them into a desired form.

Next, the best mode for embodying this invention will be detailed with reference to the following examples. Samples 1 through 4 of the invention are the examples of the best mode for embodying the invention.

Example 1

The magnetic paint for the first magnetic layer having the composition shown in Table 1 and the magnetic paint for the second magnetic layer having the composition shown in Table 2 were each kneaded and magnetic powder was then dispersed well in the paints.

Next, the viscosity of each paint was adjusted to be 1 to 30 poise (0.1 to 3 Pa.s) by adding a solvent comprising methylethyl ketone and toluene. Then, 5 parts of polyisocyanate was added as a hardener.

Further, the first and second layers were multicoated onto non-magnetic supports and then dried, so that the magnetic recording tapes were prepared, respectively.

For the comparative purpose, separately from the above, other magnetic recording tapes were prepared, in the same manner as in the above-mentioned tapes, by independently coating each of the magnetic paints, respectively.

The layer thickness of the coated layers and the physical properties of the magnetic tapes each prepared in the respective cases were measured. The results thereof are shown in Tables 3 and 4.

Table 1

Composition of Magnetic Paint for First Magnetic Layer

| Composition | Amount (Part by weight) |
|---|---|
| Co-γ-$Fe_2O_3$ (BET value 29 $m^2/g$, Hc670.Oe, Si content 0.15 wt%) | 100 |
| $Al_2O_3$ | 5 |
| Carbon black (Particle-size 40 nm) | 9 |
| Carbon black (Particle-size 20 nm) | 1 |
| $SO_3Na$ containing vinyl polychloride | 10 |
| Polyurethane | 5 |
| Myristic acid | 1.6 |
| Stearic acid | 0.4 |
| Butyl stearate | 0.5 |
| Cyclohexane | 100 |
| Methylethyl ketone | 100 |
| Toluene | 100 |

Table 2

Composition of Magnetic Paint for Second Magnetic Layer

| Composition | Amount (Part by weight) |
|---|---|
| Co-$\gamma$-$Fe_2O_3$ (BET value 50 $m^2/g$, Hc800.Oe) | 100 |
| $Al_2O_3$ | 5 |
| Carbon black (Particle-size 50 nm) | 0.9 |
| $SO_3Na$ containing vinyl polychloride (Trade Name, MA#110, manufactured by Nippon Zeon Co.) | 10 |
| Polyurethane | 5 |
| Myristic acid | 1 |
| Stearic acid | 1 |
| Butyl stearate | 0 |
| Cyclohexane | 100 |
| Methylethyl ketone | 100 |
| Toluene | 100 |

Table 3

Layer Thickness of Tape

| Layer thickness (μm) | Inventive sample | | Comparative sample | | | |
|---|---|---|---|---|---|---|
| | 1 | 2 | 1 | 2 | 3 | 4** |
| Second layer (Upper layer) | 0.3 | 0.3 | 0.3 | 3.0 | 0 | 0.3 |
| First layer (Lower layer) | 3.0 | 3.0* | 0 | 0 | 3.0 | 3.0 |

* First layer contained phosphoric acid ester $C_{18}H_{35}O(CH_2CH_2O)_5PO(OH)_2$ in a proportion of 3 wt% of the magnetic material used.

** Si contents of the first layer was changed to 0.01 wt%.

Table 4

Physical Properties of Magnetic Tape

| | Inventive sample | | Comparative sample | | | |
|---|---|---|---|---|---|---|
| | 1 | 2 | 1 | 2 | 3 | 4 |
| RF output | 0 | 0 | 0 | 0 | -2.1 | -1.5 |
| Chroma output | 0 | +0.2 | -1.3 | -1.2 | +0.1 | -0.5 |
| Longitudinal elasticity (kg/cm²) | 550 | 520 | 500 | 510 | 430 | 500 |
| Specific surface resistance (Ω/□) | $5\times10^8$ | $5\times10^8$ | $1\times10^{12}$ | $1\times10^{12}$ | $1\times10^8$ | $5\times10^8$ |
| Damage on tape-edges | A | A | B | B | C | B |
| D/O (15 µm, -14 dB, spot numbers/min.) | 1 | 2 | 32 | 18 | 5 | 15 |

Example 2

The same preparation as in Example 1 was repeated, except that the compositions and layer thicknesses of the layers were changed as follows:

Table 5

Composition of Magnetic Paint for First Magnetic Layer

| Composition | Amount (Part by weight) |
|---|---|
| Co-γ-iron oxide (BET value 35 $m^2/g$, Hc700.Oe,Si content 0.20 wt%) | 100 |
| $Al_2O_3$ | 5 |
| Carbon black (Particle-size 40 nm) | 7 |
| Carbon black (Particle-size 20 nm) | 2 |
| $SO_3Na$ containing vinyl polychloride | 10 |
| Polyurethane | 5 |
| Myristic acid | 1.6 |
| Stearic acid | 0.4 |
| Butyl stearate | 0.5 |
| Cyclohexane | 100 |
| Methylethyl ketone | 100 |
| Toluene | 100 |

Table 6

Composition of Magnetic Paint for Second Magnetic Layer

| Composition | Amount (Part by weight) |
|---|---|
| Co-γ-iron oxide (BET value 58 $m^2/g$, Hc820.Oe) | 100 |
| $Al_2O_3$ | 5 |
| Carbon black (Particle-size 50 nm) | 0.9 |
| $SO_3Na$ containing vinyl polychloride (Trade Name, MA#110, manufactured by Nippon Zeon Co.) | 10 |
| Polyurethane | 5 |
| Myristic acid | 1 |
| Stearic acid | 1 |
| Butyl stearate | 0 |
| Cyclohexane | 100 |
| Methylethyl ketone | 100 |
| Toluene | 100 |

Table 7

Layer Thickness of Tape

| Layer thickness (μm) | Inventive sample 3 |
|---|---|
| Second layer (Upper layer) | 0.6 |
| First layer (Lower layer) | 3.4 |

Table 8

Physical Properties of Magnetic Tape

| | Inventive sample 3 |
|---|---|
| RF output | 0 |
| Chroma output | 0 |
| Longitudinal elasticity ($kg/cm_2$) | 500 |
| Specific surface resistance (Ω/□) | $5 \times 10^8$ |
| Damage on tape-edges | A |
| D/O (15 μm, -14 dB, spot numbers/min.) | 1 |

The values expressed in the descriptions of the examples were obtained by the following methods of measurements:

RF Output : Obtained by the output generated when played back with a 100% white signal of 4 MHz.

Chroma Output : Obtained by the output generated when played back at 500 kHz and with an RF signal.

The values of these RF and Chroma Outputs were shown, in in Tables 4 and 8, in terms of the relative values to those outputs from Samples 1 and 3 each regarded as a value of 0 dB, respectively.

Young's Modulus : Obtained in the following manner. The elasticity, i.e., the Young's modulus, of the whole section of a tape was measured under the conditions of a 20 cm long sample and a tensile strength of 100 mm/min, while the elasticity of only a support itself was measured. Thus the elasticity of only the magnetic layer itself was obtained from the above values of measurements, according to the following Formula:

Elasticity =[(magnetic layer thickness + support thickness) (elasticity of the whole section of a tape) - (support thickness x elasticity of the support)] / [magnetic layer thickness]

Specific surface resistance : The electric resistance generated when sandwiching a slit tape between 1/2-inch (1.25 cm. approx.) electrodes, applying a load to the both ends of the tape and applying a 500V voltage to the tape was measured.

Tape-edge damage : Visually evaluated a tape which had travelled 200 times.

A : No edge-deformation found.

B : A few edge-deformation found.

C : Serious edge-deformation and cracks found.

D/O = Dropout : Measured the number of spots produced per minute under the conditions of 10 μm and -14 dB, by making use of a color-video noisemeter, Model VHO 1BZ, manufactured by Shibasoku Co.

Feasibility for Industrial Application

The magnetic recording media of the invention are of the high level in electromagnetic conversion characteristics and, particularly, in both chroma and RF outputs. They are useful for recording media, because they have Young's moduli and are resistive against any tape-edge damage, so they have excellent travelling properties as well as very few dropouts.

## Claims

1. A magnetic recording medium comprising a non-magnetic support bearing thereon:
   a first magnetic layer containing:
   a Co-containing γ-iron oxide magnetic material having a specific surface area of 25 to 40 $m^2/g$ (a BET method) and a coercive force, Hc, of 600 to 750 oersted, Oe,
   silicon in a proportion of 0.03 to 1 wt% to said magnetic material and
   carbon black in a proportion of 3 to 20 wt% to said magnetic material;
   said first magnetic layer bearing thereon
   a second magnetic layer containing:
   a Co-containing γ-iron oxide magnetic material having a specific surface area of 25 to 70 $m^2/g$ (a BET method) and a coercive force, Hc, of 750 to 950 oersted, Oe, and
   carbon black in a proportion of not more than 3 wt% to said magnetic material.

2. The magnetic recording medium as claimed in claim 1. wherein said first magnetic layer contains a phosphoric acid ester of formula (I)

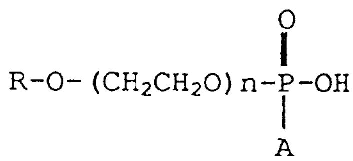

   wherein A represents an OH group or $R\text{-}O\text{-}(CH_2CH_2O)_n\text{-}$; R represents an optionally substituted alkyl group, alkenyl group, aryl group or alkylaryl group and n is an integer of 2 to 50.

3. The magnetic recording medium as claimed in claim 1 or 2, wherein said first and second magnetic layers each contain an anionic functional group-containing polyvinyl chloride.

## Patentansprüche

1. Magnetisches Aufzeichnungsmedium mit einem nichtmagnetischen Schichtträger, mit einer darauf befindlichen ersten magnetischen Schicht mit einem Co-haltigen magnetischen γ-Eisen-oxidmaterial einer spezifischen Oberfläche von 25 bis 40 $m^2/g$ (bestimmt nach der BET-Methode) und einer Koerzitiv-kraft Hc von 600 bis 750 Oersted (Oe), Silizium in einer auf das magnetische Material bezogenen Menge von 0,03 bis 1 Gew.-% und Ruß in einer auf das magnetische Material bezogenen Menge von 3 bis 20 Gew.-% und einer auf der ersten magnetischen Schicht befindlichen zweiten magne-tischen Schicht mit einem Co-haltigen magnetischen γ-Eisenoxidmaterial einer spezifischen Oberfläche von 25 bis 70 $m^2/g$ (bestimmt nach der BET-Methode) und einer Koerzitivkraft Hc von 750 bis 950 Oersted (Oe) und Ruß in einer auf das magnetische Material bezogenen Menge von nicht mehr als 3 Gew.-%.

2. Magnetisches Aufzeichnungsmedium nach Anspruch 1, wobei die erste magnetische Schicht einen Phosphorsäureesther der Formel (I):

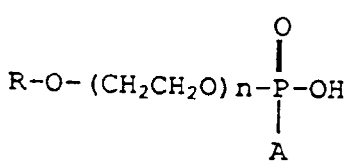

   worin bedeuten:
   A eine OH-Gruppe oder eine Gruppe der Formel
   $R\text{-}O\text{-}(CH_2CH_2O)_n\text{-}$;
   R eine gegebenenfalls substituierte Alkylgruppe, Alkenylgruppe, Arylgruppe oder Alkylarylgruppe und
   n eine ganze Zahl von 2 bis 50
   enthält.

3. Magnetisches Aufzeichungsmedium nach Anspruch 1 oder 2, wobei beide magnetische Schichten jeweils ein eine anionische funktionelle Gruppe aufweisendes Polyvinylchlorid enthalten.

## Revendications

1. Support d'enregistrement magnétique comprenant un substrat non-magnétique portant :
   une première couche magnétique contenant :
   un matériau magnétique à base d'oxyde de fer gamma contenant du Co et présentant une surface spécifique de 25 à 40 $m^2/g$ (procédé BET) et une force coercitive, Hc, de 600 à 750 oersteds, Oe,
   du silicium en une proportion de 0,03 à 1% en poids par rapport audit matériau magnétique et
   du noir de carbone en une proportion de 3 à 20% en poids par rapport audit matériau magnétique ;
   ladite première couche magnétique portant
   une seconde couche magnétique contenant :
   un matériau magnétique à base d'oxyde de fer gamma contenant du Co et présentant une surface spécifique de 25 à 70 $m^2/g$ (procédé BET) et une force coercitive, Hc, de 750 à 950 oersteds, Oe, et
   du noir de carbone en une proportion ne dépassant pas 3% en poids par rapport audit matériau magnétique ;

2. Support d'enregistrement magnétique selon la revendication 1, dans lequel ladite première couche magnétique contient un ester d'acide phosphorique de formule (I)

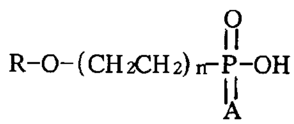

dans laquelle A représente un groupe OH ou un groupe $R\text{-}O\text{-}(CH_2CH_2)_n\text{-}$ ; R représente un groupe alkyle éventuellement substitué, un groupe alcényle, un groupe aryle, ou un groupe alkylaryle, et n représente un nombre entier de 2 à 50.

3. Support d'enregistrement magnétique selon la revendication 1 ou 2, dans lequel lesdites première et seconde couches magnétiques contiennent chacune un poly(chlorure de vinyle) contenant un groupe fonctionnel anionique.